# NEUE EUROPÄISCHE PATENTSCHRIFT

(11) **EP 2 510 601 B2**
(45) Veröffentlichungstag und Bekanntmachung des Hinweises auf die Entscheidung über den Einspruch: **19.02.2020**
(45) Hinweis auf die Patenterteilung: 12.10.2016
(21) Anmeldenummer: 10790415.3
(22) Anmeldetag: 08.12.2010
(51) Int. Cl.: H02J 7/34, H02J 3/32, H02J 3/38

(54) **SYSTEM ZUR DEZENTRALEN SPEICHERUNG UND GENERIERUNG ELEKTRISCHER ENERGIE**
SYSTEM FOR DECENTRALLY STORING AND GENERATING ELECTRIC ENERGY
SYSTÈME DE STOCKAGE ET DE GÉNÉRATION DÉCENTRALISÉS D'ÉNERGIE ÉLECTRIQUE

(30) Priorität: 10.12.2009 DE 102009054485
(43) Veröffentlichungstag der Anmeldung: 17.10.2012
(73) Patentinhaber: Samsung SDI Co., Ltd., Gyeonggi-do (KR); Robert Bosch GmbH, 70442 Stuttgart (DE)
(72) Erfinder: FETZER, Joachim, 73342 Bad-Ditzenbach (DE); BUTZMANN, Stefan, 71717 Beilstein (DE); FINK, Holger, 70567 Stuttgart (DE)
(74) Vertreter: Bee, Joachim
(86) Internationale Anmeldenummer: PCT/EP2010/069186
(87) Internationale Veröffentlichungsnummer: WO 2011/070078

(56) Entgegenhaltungen:
- EP-A1- 1 986 306
- DE-A1- 10 232 416
- JP-A- 2004 350 371
- US-A1- 2004 125 618
- US-A1- 2005 134 236
- US-A1- 2009 296 434

## Beschreibung

### Stand der Technik

Es besteht ein wachsender Bedarf an Batteriesystemen, welche in stationären Anwendungen wie Windkraftanlagen und Notstromsystemen zum Einsatz kommen sollen. In naher Zukunft wird die Energieversorgung von Haushalten zunehmend dezentral erfolgen, das heißt, es werden in den Haushalten zunehmend Energiewandler wie z.B. Solarzellen oder Brennstoffzellen eingesetzt, um vor Ort elektrische Energie zu erzeugen. Darüber hinaus besteht seitens der Energieversorgungsunternehmen ein Interesse, in Phasen geringer Netzlast elektrische Energie zwischenspeichern und in Spitzenlastzeiten sowohl zur Deckung des gesamten Energiebedarfs, als auch zur Stützung des Netzes wieder entnehmen zu können. Dabei wäre es vorteilhaft, die Speicherung ebenfalls dezentral durchführen zu können, um das Netz in den Spitzenlastzeiten zu entlasten, da die abzurufende Energie bereits in örtlicher Nähe zum Verbraucher gespeichert ist. Zur dezentralen Speicherung elektrischer Energie stehen jedoch derzeit noch keine geeigneten Konzepte zur Verfügung.

In DE 102 32 416 A1 werden eine Schaltungsanordnung und Verfahren zum Stabilisieren einer Versorgungsspannung beschrieben, wobei ein erster Spannungswandler dazu vorgesehen ist, eine Spannung über einen zweiten Energiespeicher derart zu regeln, dass die Summe über einen ersten und den zweiten Energiespeicher gleich einer vorbestimmten Sollspannung sind, wobei der erste Spannungswandler von einem dritten Energiespeicher versorgt wird. Ferner ist ein zweiter Spannungswandler dazu vorgesehen, einen Energieaustausch zwischen dem ersten und dem dritten Energiespeicher zu ermöglichen.

In US 2004/0125618 A1 wird ein System für Mehrfach-Energiequellen beschrieben, bei denen verschiedene Arten von elektrischen Energiequellen zusammengeschlossen werden, um eine definierte Last, beispielsweise einen Haushalt, mit Energie zu versorgen.

### Offenbarung der Erfindung

Die Erfindung hat das Ziel, eine Vorrichtung einzuführen, die den obengenannten Bedarf zu befriedigen vermag.

Die Erfindung führt daher ein Batteriesystem gemäß dem unabhängigen Anspruch 1 ein. Das erfindungsgemäße Batteriesystem ist versehen mit einer Mehrzahl von Batteriemodulen, die jeweils eine Vielzahl von Batteriezellen umfassen, einem Gleichspannungszwischenkreis mit einem ersten Pol und einem zweiten Pol, und einem zwischen den Gleichspannungszwischenkreis und einen Anschluss an ein Energieversorgernetz geschalteten Umrichter, welcher ausgebildet ist, eine Wechselspannung im Energieversorgernetz in eine Gleichspannung umzurichten und an den Gleichspannungszwischenkreis auszugeben, sowie eine Gleichspannung im Gleichspannungszwischenkreis in eine Wechselspannung umzurichten und an das Energieversorgernetz auszugeben. Erfindungsgemäß verfügen die Batteriemodule über jeweils einen DC/DC-Umsetzer, über den sie mit dem Gleichspannungszwischenkreis verbunden sind.

Die Batteriezellen des Batteriesystems werden gemäß der Erfindung nicht direkt über den Gleichspannungszwischenkreis und den Umrichter (Gleichrichter/Wechselrichter) an das Energieversorgernetz gekoppelt. Das Batteriesystem wird stattdessen aus einzelnen Batteriemodulen aufgebaut, welche jeweils mit einem DC/DC-Umsetzer ausgestattet sind. Die DC/DC-Umsetzer sind primärseitig mit den Batteriezellen des jeweiligen Batteriemoduls elektrisch verbunden. Sekundärseitig koppeln die DC/DC-Umsetzer die Batteriemodule an den Gleichspannungszwischenkreis. Dieses Vorgehen weist eine Reihe von Vorteilen auf:
- Hohe Flexibilität hinsichtlich der Auslegung und ggf. auch der Erweiterung des Batteriesystems. Komponenten wie der Umrichter oder auch die einzelnen Batteriemodule können standardisiert werden, ein Batteriesystem für jeweils geltenden Anforderungen aufgrund des modularen Aufbaus angepasst und durch Hinzufügen weiterer Batteriemodule erweitert werden.
- Erhöhte Zuverlässigkeit, da der Ausfall einzelner Batteriezellen oder Batteriemodule nicht zum Ausfall des gesamten Batteriesystems führt. Stattdessen kann die Gesamtenergie, die dem Batteriesystem entnommen werden soll, aus den weiterhin korrekt funktionierenden Batteriemodulen entnommen werden, indem die Ausgangsspannung der DC/DC-Umsetzer entsprechend nachgeregelt wird oder die Ausgangsleistung der DC/DC-Umsetzer erhöht wird.
- Hohe Verfügbarkeit, da das Batteriesystem bei geeigneter Auslegung auch während des Austauschs eines Batteriemoduls weiterbetrieben werden kann. Das Batteriesystem kann so aufgebaut werden, dass ein Batteriemodul ausgangsseitig elektrisch neutralisiert wird und die verbleibenden Batteriemodule die Speicheraufgaben wahrnehmen. Bei geeignetem mechanischem Aufbau kann das auszutauschende Batteriemodul aus dem Batteriesystem entnommen und durch ein anderes ersetzt werden, welches dann aktiviert wird, so dass wieder alle Batteriemodule des Batteriesystems aktiv sind.
- Einfache und sichere Wartbarkeit des Batteriesystems, da die einzelnen Batteriemodule jeweils eine Spannung aufweisen, welche unter den zulässigen Grenzwerten für den Berührungsschutz liegen (z.B. kann eine Spannung eines Batteriemoduls 60V betragen, so dass keine Gefährdung des Wartungspersonals zu erwarten ist).
- Erhöhte Lebensdauer des Batteriesystems, da die Batteriemodule jeweils in Abhängigkeit ihres Alterungszustands, ihres Ladezustands, ihrer Temperatur und ggf. auch weiterer Parameter an der Speicherung und an der Abgabe elektrischer Energie in unterschiedlichem Maß beteiligt werden können (betrifft z.B. die Leistung während der Lade- und Entladevorgänge der Batterie oder die Ladezustandsänderung der Batteriemodule), so dass die Batteriemodule einer gleichmäßigen Alterung unterliegen. Die Batteriemodule können aufgrund der Topologie des Batteriesystems unterschiedlich betrieben werden. Somit steht eine Einflussgröße für eine Betriebsstrategie bereit, die z.B. den Alterungszustand der Batteriemodule im Hinblick auf eine möglichst gleichmäßig Alterung optimiert. Es können über die Betriebsstrategie aber auch andere Parameter im Betrieb optimiert werden, z.B. der Ladezustand der Batteriemodule, im Hinblick auf einen möglichst gleichen Wert für alle Batteriemodule.
- Erhöhte Leistungsfähigkeit des Systems durch Einsatz unterschiedlicher Batteriezellen (z.B. Leistungs- und Energiezellen), um das Batteriesystem hinsichtlich der geforderten Betriebsabläufe optimiert auslegen zu können. So können Batteriemodule mit unterschiedlichen elektrischen Eigenschaften verwendet werden. Beispielsweise können Batteriemodule mit auf Speicherung möglichst großer Mengen elektrischer Energie optimierten Batteriezellen (Energiezellen) mit solchen mit auf die Abgabe eine möglichst großen elektrischen Leistung (Leistungszellen) gemischt werden, wobei sich das Mischungsverhältnis vor allem nach den Anforderungen an die maximal abzugebende Leistung bestimmt.
- Kostengünstige Realisierung des Gesamtsystems, da der Umrichter für eine konstante Zwischenkreisspannung ausgelegt werden kann und eine separate Lade- und Trennvorrichtung für das Aufladen des Gleichspannungszwischenkreises entfallen kann. Bei batteriebasierten Notstromaggregaten nach dem Stand der Technik ist die Zwischenkreisspannung abhängig vom Ladezustand der direkt an den Gleichspannungszwischenkreis gekoppelten Batteriezellen abhängig und somit veränderbar, was durch die DC/DC-Umsetzer der Erfindung vermieden wird.
- Für das Batteriesystem steht ohne Zusatzaufwand ein Kurzschlussschutz sowie eine Begrenzung der bei den Lade- und Entladevorgängen auftretenden Ströme und Leistungen zur Verfügung, da die DC/DC-Umsetzer entsprechend gesteuert bzw. deaktiviert werden können.

Ferner weist erfindungsgemäß die Mehrzahl von Batteriemodulen ein erstes Batteriemodul und ein zweites Batteriemodul auf, wobei das erste Batteriemodul einen ersten DC/DC-Umsetzer umfasst und das zweite Batteriemodul einen zweiten DC/DC-Umsetzer umfasst.

Erfindungsgemäß ist der erste DC/DC-Umsetzer mit dem zweiten DC/DC-Umsetzer ausgangsseitig in Serie geschaltet. Dabei kann ein erster Ausgang des ersten DC/DC-Umsetzers mit dem ersten Pol des Gleichspannungszwischenkreises und ein zweiter Ausgang des ersten DC/DC-Umsetzers mit einem ersten Ausgang des zweiten DC/DC-Umsetzers verbunden sein. Diese Ausführungsformen ermöglichen, eine hohe Zwischenkreisspannung durch Summierung der Ausgangsspannungen der einzelnen DC/DC-Umsetzer zu erzeugen. Wenn ein Batteriemodul deaktiviert werden soll (beispielsweise für den Austausch), wird der zugehörige DC/DC-Umsetzer deaktiviert und ein Ausweichpfad für den Batteriestrom im Batteriesystem geschlossen. Das Batteriemodul ist so elektrisch neutralisiert und kann aus dem Batteriesystem entfernt werden. Die DC/DC-Umsetzer der verbleibenden Batteriemodule können dann so eingestellt werden, dass sie die durch die Entnahme des auszutauschenden Batteriemoduls gesenkte Zwischenkreisspannung ausgleichen, indem sie eine entsprechend höhere Spannung erzeugen.

Gemäß einer nicht zur Erfindung gehörenden Ausführungsform kann der erste DC/DC-Umsetzer mit dem zweiten DC/DC-Umsetzer ausgangsseitig parallel geschaltet sein. Diese Ausführungsform besitzt den Vorteil, dass ohne jedes Nachregeln und ohne jede Schaltungsmaßnahme Batteriemodule entnommen oder hinzugefügt werden können. Nachteilig ist jedoch, dass eine gegenüber der Spannung der Batteriezellen in den Batteriemodulen hohe Ausgangsspannung der DC/DC-Umsetzer, welche bei einer reinen Parallelschaltung der Zwischenkreisspannung entspricht, einen geringeren Wirkungsgrad der DC/DC-Umsetzer zur Folge hat. Es sind daher auch Mischformen vorstellbar, bei dem mehrere Gruppen von ausgangsseitig seriengeschalteten Batteriemodulen bzw. DC/DC-Umsetzern wiederum parallel verschaltet werden.

Bevorzugt ist der Gleichspannungszwischenkreis zum Anschließen einer Windkraftanlage, einer Photovoltaikanlage, eines Generators oder von Brennstoffzellen ausgebildet, um eine nahtlose Integration in anderweitige vorhandene elektrische Energiesysteme zu ermöglichen.

Die Batteriezellen sind vorzugsweise als Lithium-lonen-Batteriezellen oder als Nickel-Metall-Hydrid-Batteriezellen ausgeführt, die die Vorteile einer hohen Lebensdauer (mehr als 2.500 komplette Lade- und Entladezyklen), geringer Selbstentladung und eines hohen Wirkungsgrades besitzen.

Der Umrichter kann über ein Netzfilter verfügen, welches die Belastung des Energieversorgernetzes mit Oberschwingungen aufgrund der Funktionsweise des Umrichters reduzieren hilft.

Bevorzugt sind der Anschluss an das Energieversorgernetz dreiphasig ausgeführt und der Umrichter ausgebildet, eine Wechselspannung im dreiphasigen Energieversorgernetz in eine Gleichspannung umzurichten und an den Gleichspannungszwischenkreis auszugeben, sowie eine Gleichspannung im Gleichspannungszwischenkreis in eine Wechselspannung umzurichten und an das dreiphasige Energieversorgernetz auszugeben. Dabei wird die dem dreiphasigen Energieversorgernetz entnommene bzw. zugeführte elektrische Energie möglichst gleichmäßig auf die drei Phasen des Energieversorgernetzes verteilt.

Das Batteriesystem kann einen Pufferkondensator aufweisen, welcher über eine mit dem ersten Pol des Gleichspannungszwischenkreises verbundene erste Elektrode und über eine mit dem zweiten Pol des Gleichspannungszwischenkreises verbundene zweite Elektrode verfügt.

### Zeichnungen

### Kurzbeschreibung der Abbildungen

Die Erfindung wird im Folgenden anhand von Abbildungen von Ausführungsbeispielen näher erläutert. Es zeigen:
- Fig. 1: ein Batteriesystem gemäß der Erfindung;
- Fig. 2: ein erstes Ausführungsbeispiel der Erfindung; und
- Fig. 3: eine nicht zur Erfindung gehörende Ausführungsform.

### Ausführliche Beschreibung der Abbildungen

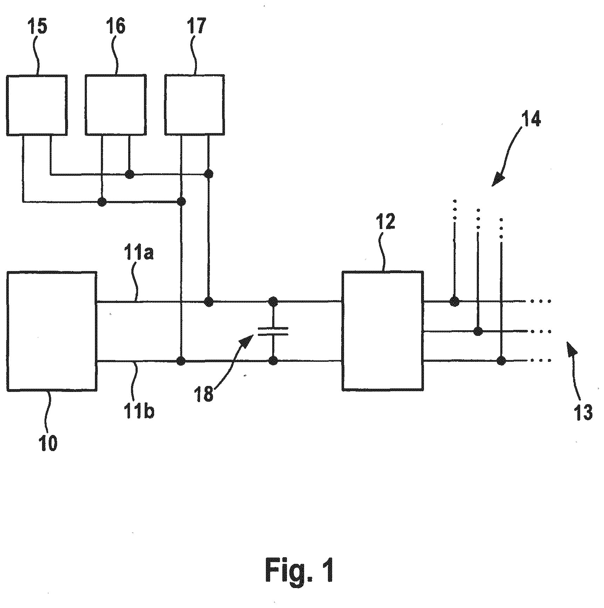

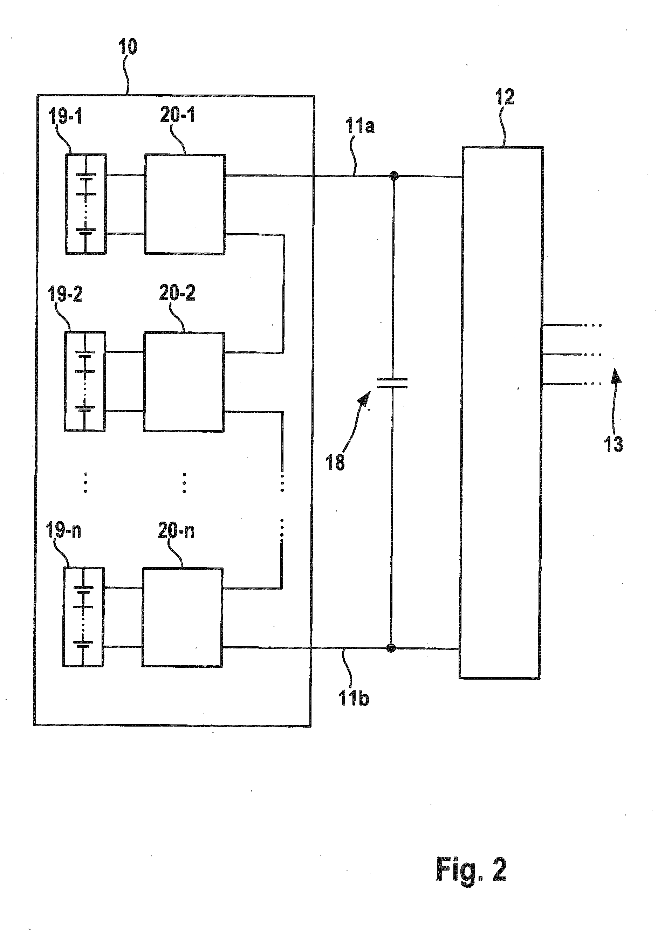

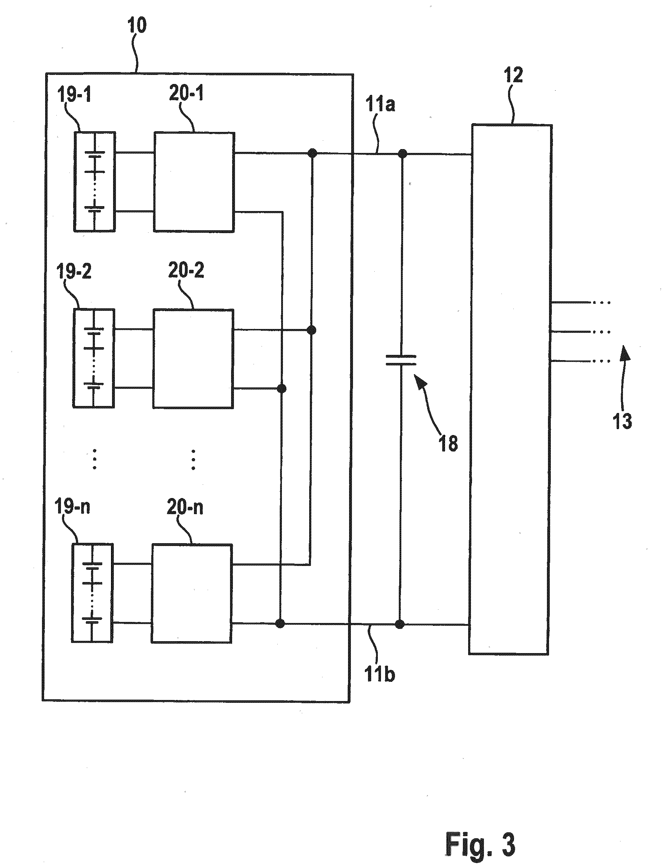

Fig. 1 zeigt ein Batteriesystem gemäß der Erfindung. Eine Batterie 10, deren innerer Aufbau anhand der Fig. 2 und 3 näher erläutert wird, dient als Energiespeicher des Batteriesystems der Erfindung. Die Batterie 10 ist mit einem ersten Pol 11a und einem zweiten Pol 11 b eines Gleichspannungszwischenkreises verbunden, welcher die Batterie 10 mit einem Umrichter 12 verbindet. Der Gleichspannungszwischenkreis weist im gezeigten Beispiel einen optionalen Pufferkondensator 18 auf, der die Gleichspannung im Gleichspannungszwischenkreis stabilisiert. Der Umrichter 12 dient für den Energietransfer zwischen dem Gleichspannungszwischenkreis und dem Energieversorgernetz, mit dem der Umrichter über Anschlüsse 13 verbunden ist. Der Umrichter kann eine Wechselspannung des Energieversorgernetzes in eine Gleichspannung umsetzen und diese an den Gleichspannungszwischenkreis ausgeben (Aufladung der Batterie 10), oder aber die Gleichspannung des Gleichspannungszwischenkreises in eine Wechselspannung umsetzen und diese an das Energieversorgernetz ausgeben (Entladung der Batterie 10). Der Umrichter 12 kann zusätzlich Anschlüsse 14 für den Anschluss eines Haushaltes oder sonstiger elektrischer Verbraucher aufweisen. Der Gleichspannungszwischenkreis kann zudem an andere elektrische Energiequellen angeschlossen werden, welche Gleichspannungen generieren, wie z.B. an eine Windkraftanlage 15, eine Photovoltaikanlage 16 oder eine Brennstoffzelle 17. Natürlich können auch andere Gleichspannungsgeneratoren angeschlossen werden, beispielsweise von einem Verbrennungsmotor getriebene. Hierbei sind ggf. leistungselektronische Maßnahmen vorzusehen, um die Anbindung an den Gleichspannungszwischenkreis zu ermöglichen, z.B. in Form von DC/DC-Umsetzern, um eine Anpassung an die Spannung im Gleichspannungszwischenkreis durchführen zu können. Dabei kann ggf. auch auf die Schaltungskonzepte für die interne Organisation der Batterie 10, wie sie anhand der Fig. 2 und 3 erläutert wird, angewendet werden.

Mit der in Fig. 1 dargestellten Architektur können wenigstens die folgenden Betriebszustände realisiert werden:
1. Der Haushalt wird aus dem Energieversorgungsnetz gespeist. In der Batterie 10 wird Energie gespeichert. Die ggf. vorhandenen zusätzlichen elektrischen Energiequellen geben keine Energie in den Gleichspannungszwischenkreis ab.
2. Der Haushalt wird aus dem Energieversorgungsnetz gespeist. Die im Haushalt vorhandenen anderen elektrischen Energiequellen geben Energie ab, die in der Batterie 10 gespeichert wird.
3. Der Haushalt wird aus dem Energieversorgungsnetz gespeist. Die zusätzlichen elektrischen Energiequellen geben keine Energie ab, die Batterie 10 wird aus dem Energieversorgungsnetz geladen (z.B. zu Zeiten geringer Netzlast).
4. Der Haushalt wird aus dem Energieversorgungsnetz gespeist. Die zusätzlichen elektrischen Energiequellen geben Energie ab, die über den Umrichter in das Energieversorgungsnetz eingespeist wird. Zusätzlich kann die Batterie 10 geladen oder entladen werden. Dabei kann sich ein positives oder negatives Energiesaldo ergeben, d.h. dem Energieversorgungsnetz effektiv Energie entnommen oder zugeführt werden.
5. Bei Ausfall des Energieversorgungsnetzes kann der Haushalt über den Umrichter aus der Batterie 10 und/oder den zusätzlichen elektrischen Energiequellen versorgt werden. Auch in diesem Betriebszustand kann ggf. die Batterie 10 geladen werden, falls vor Ort mehr elektrische Energie erzeugt wird, als im Haushalt verbraucht wird.

Die In Fig. 1 dargestellte Systemarchitektur bietet somit die Möglichkeit, elektrische Energie zwischen dem Energieversorgungsnetz, der Batterie 10 und ggf. zusätzlichen Energiequellen auszutauschen.

In Fig. 1 ist die Anbindung des Batteriesystems and das Energieversorgernetz beispielhaft dreiphasig dargestellt, kann aber ohne Einschränkung des Erfindungsgedankens auch bei einem einphasigen Netz erfolgen. Um die Anforderungen der Energieversorgungsunternehmen hinsichtlich der zulässigen Oberschwingungsanteile in den Netzströmen erfüllen zu können, ist der Einsatz eines Netzfilters sinnvoll, welcher in den Umrichter eingefügt werden kann.

Fig. 2 zeigt ein erstes Ausführungsbeispiel der Erfindung. Komponenten mit identischen Bezugszeichen wie in Fig. 1 entsprechen denen der Fig. 1, weshalb eine erneute Beschreibung unterlassen wird. Die Batterie 10 des ersten Ausführungsbeispiels der Erfindung besitzt eine Mehrzahl von Batteriemodulen 19-1 bis 19-n, welche jeweils eine oder mehrere, gewöhnlich seriengeschaltete, Batteriezellen enthalten. Die Batteriemodule 19-1 bis 19-n sind ausgangsseitig mit jeweils einem DC/DC-Umsetzer 20-1 bis 20-n verbunden. Die DC/DC-Umsetzer 20-1 bis 20-n sind ihrerseits ausgangsseitig zu einer Serienschaltung verbunden, so dass jeder Ausgang eines DC/DC-Umsetzers mit einem Ausgang jeweils eines benachbarten DC/DC-Umsetzers verbunden ist. Der erste DC/DC-Umsetzer 20-1 der Serienschaltung weist einen Ausgang auf, der mit dem ersten Pol 11 a des Gleichspannungszwischenkreises verbunden ist. Entsprechend weist auch der letzte DC/DC-Umsetzer 20-n der Serienschaltung einen Ausgang auf, der mit dem zweiten Pol 11 b des Gleichspannungszwischenkreises verbunden ist.

Fig. 3 zeigt eine nicht zur Erfindung gehörende Ausführungsform. Wiederum bezeichnen hier identische Bezugszeichen entsprechende Komponenten wie in den Fig. 1 und 2. Die Batterie 10 des zweiten Ausführungsbeispiels weicht in ihrem internen Aufbau allerdings von der des ersten Ausführungsbeispiels ab. Hier sind die Ausgänge der DC/DC-Umsetzer 20-1 bis 20-n parallelgeschaltet, d.h. jeder der DC/DC-Umsetzer 20-1 bis 20-n weist einen ersten Ausgang auf, der mit dem ersten Pol 11a des Gleichspannungszwischenkreises verbunden ist, und einen zweiten Ausgang, der mit dem zweiten Pol 11 b des Gleichspannungszwischenkreises verbunden ist.

## Patentansprüche

1. Ein Batteriesystem mit einer Mehrzahl von Batteriemodulen (19-1,..., 19-n), die jeweils eine oder mehrere Batteriezellen umfassen, einem Gleichspannungszwischenkreis mit einem ersten Pol (11a) und einem zweiten Pol (11b), und einem zwischen den Gleichspannungszwischenkreis und einen Anschluss (13) für ein Energieversorgernetz geschalteten Umrichter (12), welcher ausgebildet ist, eine Wechselspannung des Energieversorgernetzes in eine Gleichspannung umzurichten und an den Gleichspannungszwischenkreis auszugeben sowie eine Gleichspannung des Gleichspannungszwischenkreises in eine Wechselspannung umzurichten und an das Energieversorgernetz auszugeben, wobei die Batteriemodule (19-1,..., 19-n) über jeweils einen DC/DC-Umsetzer (20-1,..., 20-n) verfügen und über den jeweils einen DC/DC-Umsetzer (20-1,..., 20-n) mit dem Gleichspannungszwischenkreis verbunden sind, wobei die Mehrzahl von Batteriemodulen (19-1,..., 19-n) ein erstes Batteriemodul (19-1) und ein zweites Batteriemodul (19-2, 19-n) aufweist, wobei das erste Batteriemodul (19-1) einen ersten DC/DC-Umsetzer (20-1) umfasst und das zweite Batteriemodul (19-2, 19-n) einen zweiten DC/DC-Umsetzer (20-2, 20-n) umfasst, wobei der erste DC/DC-Umsetzer (20-1) mit dem zweiten DC/DC-Umsetzer (20-2, 20-n) ausgangsseitig in Serie geschaltet ist, **dadurch gekennzeichnet, dass** der jeweilige DC/DC-Umsetzer eingerichtet ist, bei Austausch seines zugehörigen Batteriemoduls deaktiviert zu werden, und das Batteriesystem eingerichtet ist, bei Deaktivierung eines DC/DC-Umsetzers und Austausch des zugehörigen Batteriemoduls jeweils einen Ausweichpfad für den Batteriestrom im Batteriesystem zu schließen, wodurch das zugehörige Batteriemodul elektrisch neutralisiert wird, wobei die DC/DC-Umsetzer der verbleibenden Batteriemodule so eingerichtet sind, dass sie bei einer Deaktivierung des DC/DC-Umsetzers und dem Austausch des zugehörigen Batteriemoduls die durch die Entnahme des auszutauschenden Batteriemoduls gesenkte Zwischenkreisspannung ausgleichen, indem sie eine entsprechend höhere Spannung erzeugen.

2. Das Batteriesystem von Anspruch 1, bei dem ein erster Ausgang des ersten DC/DC-Umsetzers (20-1) mit dem ersten Pol (11a) des Gleichspannungszwischenkreises und ein zweiter Ausgang des ersten DC/DC-Umsetzers (20-1) mit einem ersten Ausgang des zweiten DC/DC-Umsetzers (20-2, 20-n) verbunden sind.

3. Das Batteriesystem von einem dervorhergehenden Ansprüche, bei dem der Gleichspannungszwischenkreis zum Anschließen einer Windkraftanlage (15), einer Photovoltaikanlage (16), eines Generators oder von Brennstoffzellen (17) ausgebildet ist.

4. Das Batteriesystem von einem dervorhergehenden Ansprüche, bei dem die Batteriezellen als Lithium-Ionen-Batteriezellen oder als Nickel-Metall-Hydrid-Batteriezellen ausgeführt sind.

5. Das Batteriesystem von einem dervorhergehenden Ansprüche, bei dem der Umrichter (12) über ein Netzfilter verfügt.

6. Das Batteriesystem von einem dervorhergehenden Ansprüche, bei dem der Anschluss (13) an das Energieversorgernetz dreiphasig ausgeführt und der Umrichter (12) ausgebildet ist, eine Wechselspannung im dreiphasigen Energieversorgernetz in eine Gleichspannung umzurichten und an den Gleichspannungszwischenkreis auszugeben, sowie eine Gleichspannung im Gleichspannungszwischenkreis in eine Wechselspannung umzurichten und an das dreiphasige Energieversorgernetz auszugeben.

7. Das Batteriesystem von einem dervorhergehenden Ansprüche mit einem Pufferkondensator (18), welcher über eine mit dem ersten Pol (11a) des Gleichspannungszwischenkreises verbundene erste Elektrode und über eine mit dem zweiten Pol (11 b) des Gleichspannungszwischenkreises verbundene zweite Elektrode verfügt.

## Claims

1. Battery system having a plurality of battery modules (19-1, ..., 19-n) each comprising one or more battery cells, a DC voltage intermediate circuit having a first pole (11a) and a second pole (11b), and a converter (12) which is connected between the DC voltage intermediate circuit and a connection (13) for an energy supplier network and is designed to convert an AC voltage from the energy supplier network into a DC voltage and to output it to the DC voltage intermediate circuit and to convert a DC voltage from the DC voltage intermediate circuit into an AC voltage and to output it to the energy supplier network, the battery modules (19-1, ..., 19-n) each having a DC/DC converter (20-1, ..., 20-n) and are connected to the DC voltage intermediate circuit via the respective one DC/DC converter (20-1, ..., 20-n), the plurality of battery modules (19-1, ..., 19-n) having a first battery module (19-1) and a second battery module (19-2, 19-n), the first battery module (19-1) comprising a first DC/DC converter (20-1) and the second battery module (19-2, 19-n) comprising a second DC/DC converter (20-2, 20-n), the first DC/DC converter (20-1) being connected in series with the second DC/DC converter (20-2, 20-n) on the output side, **characterized in that** the respective DC/DC converter is configured to be deactivated if its associated battery module is replaced, and the battery system is configured to close a bypass path for the battery current in the battery system in each case if a DC/DC converter is deactivated and the associated battery module is replaced, as a result of which the associated battery module is electrically neutralized, wherein the DC/DC converters of the remaining battery modules are configured in such a manner that they compensate for the intermediate circuit voltage, which is reduced as a result of the removal of the battery module to be replaced if the DC/DC converter is deactivated and the associated battery module is replaced, by generating an accordingly higher voltage.

2. Battery system from Claim 1, in which a first output of the first DC/DC converter (20-1) is connected to the first pole (11a) of the DC voltage intermediate circuit and a second output of the first DC/DC converter (20-1) is connected to a first output of the second DC/DC converter (20-2, 20-n).

3. Battery system from one of the preceding claims, in which the DC voltage intermediate circuit is designed to connect a wind power plant (15), a photovoltaic installation (16), a generator or fuel cells (17).

4. Battery system from one of the preceding claims, in which the battery cells are in the form of lithium ion battery cells or nickel-metal hydride battery cells.

5. Battery system from one of the preceding claims, in which the converter (12) has a mains filter.

6. Battery system from one of the preceding claims, in which the connection (13) to the energy supplier network has a three-phase design and the converter (12) is designed to convert an AC voltage in the three-phase energy supplier network into a DC voltage and to output it to the DC voltage intermediate circuit and to convert a DC voltage in the DC voltage intermediate circuit into an AC voltage and to output it to the three-phase energy supplier network.

7. Battery system from one of the preceding claims, having a buffer capacitor (18) having a first electrode which is connected to the first pole (11a) of the DC voltage intermediate circuit and a second electrode which is connected to the second pole (11b) of the DC voltage intermediate circuit.

## Revendications

1. Système de batterie pourvu d'une pluralité de modules de batterie (19-1, ..., 19-n) qui comprennent respectivement une ou plusieurs cellules de batterie, un circuit intermédiaire à tension continue ayant un premier pôle (11a) et un deuxième pôle (11b), et, branché entre le circuit intermédiaire à tension continue et une borne (13) pour un réseau d'alimentation en énergie, un convertisseur (12) qui est configuré pour convertir une tension alternative du réseau d'alimentation en énergie en une tension continue et la délivrer au circuit intermédiaire à tension continue ainsi que pour convertir une tension continue du circuit intermédiaire à tension continue en une tension alternative et la délivrer au réseau d'alimentation en énergie, les modules de batterie (19-1, ..., 19-n) disposant respectivement d'un convertisseur CC/CC (20-1, ..., 20-n) et étant reliés au circuit intermédiaire à tension continue par le biais du convertisseur CC/CC (20-1, ..., 20-n) respectif, la pluralité de modules de batterie (19-1, ..., 19-n) possédant un premier module de batterie (19-1) et un deuxième module de batterie (19-2, 19-n), le premier module de batterie (19-1) comprenant un premier convertisseur CC/CC (20-1) et le deuxième module de batterie (19-2, 19-n) comprenant un deuxième convertisseur CC/CC (20-2, 20-n), le premier convertisseur CC/CC (20-1) étant branché en série avec le deuxième convertisseur CC/CC (20-2, 20-n) du côté de la sortie, **caractérisé en ce que** le convertisseur CC/CC respectif est conçu pour être désactivé lors du remplacement de son module de batterie associé et le système de batterie est conçu pour, lors de la désactivation d'un convertisseur CC/CC et du remplacement du module de batterie associé, respectivement fermer un chemin de dérivation pour le courant de batterie dans le système de batterie, moyennant quoi le module de batterie associé est neutralisé électriquement, les convertisseurs CC/CC des modules de batterie restants étant conçus de telle sorte que lors d'une désactivation du convertisseur CC/CC et du remplacement du module de batterie associé, ils compensent la tension de circuit intermédiaire abaissée du fait du retrait du module de batterie à remplacer en générant une tension plus élevée en conséquence.

2. Système de batterie selon la revendication 1, avec lequel une première sortie du premier convertisseur CC/CC (20-1) est reliée au premier pôle (11a) du circuit intermédiaire à tension continue et une deuxième sortie du premier convertisseur CC/CC (20-1) est reliée à une première sortie du deuxième convertisseur CC/CC (20-2, 20-n).

3. Système de batterie selon l'une des revendications précédentes, avec lequel le circuit intermédiaire à tension continue est configuré pour le raccordement d'un aérogénérateur (15), d'une installation photovoltaïque (16), d'un générateur ou de piles à combustible (17).

4. Système de batterie selon l'une des revendications précédentes, avec lequel les cellules de batterie sont réalisées sous la forme de cellules de batterie au lithium-ion ou de cellules de batterie nickel-hydrure métallique.

5. Système de batterie selon l'une des revendications précédentes, avec lequel le convertisseur (12) dispose d'un filtre secteur.

6. Système de batterie selon l'une des revendications précédentes, avec lequel la borne (13) pour le réseau d'alimentation en énergie est réalisée triphasée et le convertisseur (12) est configuré pour convertir une tension alternative dans le réseau d'alimentation en énergie triphasé en une tension continue et la délivrer au circuit intermédiaire à tension continue ainsi que pour convertir une tension continue dans le circuit intermédiaire à tension continue en une tension alternative et la délivrer au réseau d'alimentation en énergie triphasé.

7. Système de batterie selon l'une des revendications précédentes comprenant un condensateur tampon (18) qui dispose d'une première électrode reliée au premier pôle (11a) du circuit intermédiaire à tension continue et d'une deuxième électrode reliée au deuxième pôle (11b) du circuit intermédiaire à tension continue.
